# EUROPÄISCHE PATENTANMELDUNG

(11) **EP 2 357 070 A1**
(43) Veröffentlichungstag der Anmeldung: **17.08.2011**
(21) Anmeldenummer: 11153799.9
(22) Anmeldetag: 09.02.2011
(51) Int. Cl.: B29C 33/38, B29C 45/34, B28B 1/24, B28B 7/34

(54) **Spritzgießverfahren für Kondensationsharze und Vorrichtung für das Verfahren**

(30) Priorität: 12.02.2010 DE 102010007780
(71) Anmelder: Fraunhofer-Gesellschaft zur Förderung der Angewandten Forschung e.V., 80686 München (DE)
(72) Erfinder: Clade, Jürgen, 97084, Würzburg (DE); Spaniol, Heiko, 36419, Geisa (DE); Sporn, Dieter, 97082, Würzburg (DE); Rüdiger, Arne, 97228, Rottendorf (DE); Ziegler, Horst, 97318, Kitzingen (DE)
(74) Vertreter: Olgemöller, Luitgard Maria

(57) **Zusammenfassung**

Die Erfindung betrifft ein Verfahren zum Herstellen von Formkörpern aus durch Kondensationsreaktionen und/oder aus Lösungen/Suspensionen erhaltenen Polymeren, worin ein Ausgangsmaterial in Form einer pastösen Masse in ein Spritzgusswerkzeug gefüllt und darin ausgehärtet wird, dadurch gekennzeichnet, dass das Spritzgusswerkzeug Poren oder Öffnungen aufweist, durch die gasförmige Spaltprodukte der Härtungsreaktion und/oder gasförmige Suspensions- bzw. Lösemittel entweichen können, nicht aber das Ausgangsmaterial. Weiterhin betrifft sie ein für das Verfahren geeignetes Spritzgusswerkzeug und eine Spritzgussvorrichtung, die dieses Werkzeug umfasst.

## Beschreibung

Gegenstand der Erfindung ist ein Verfahren zum Spritzgießen von Kondensationsharzen aus der Schmelze oder Suspension/Lösung, damit hergestellte Formkörper sowie ein Spritzgusswerkzeug, mit dem das Verfahren durchgeführt werden kann.

Die meisten bekannten präkeramischen Polymere härten durch Polykondensationsreaktionen, d.h. unter Abspaltung niedermolekularer Spaltprodukte, aus. Zwar liefert der Stand der Technik die generelle Information, dass die Formgebung präkeramischer Werkstoffe mit Hilfe von Spritzgießen in geschlossenen Formwerkzeugen erfolgen kann, siehe DE 19937322 C2. Sie sind jedoch dem "klassischen" Spritzgussverfahren nicht ohne weiteres zugänglich, weil die Entstehung der Spaltprodukte zur Bildung von Poren und Blasen im Werkstück führt. Auch Polymere, die bei ihrer Endhärtung keine niedermolekularen Spaltprodukte mehr abgeben, aber wegen ihrer Umschmelzbarkeit nur in einer Suspension/Lösung fließfähig gemacht werden können, sind von diesem Verfahren bisher ausgeschlossen.

Aus GB 1,154,965 ist ein Formgebungsverfahren für ein thermoplastisches Schaummaterial bekannt, das mit Hilfe eines Spritzgusswerkzeugs mit Wänden durchgeführt wird, die zumindest teilweise eine Oberfläche aus mikroporösem Material aufweisen. Gas, das sich während der chemischen Zersetzung des Blähmittels bildet, kann entweder mit Hilfe dieser porösen Oberfläche abgeleitet oder von dieser absorbiert werden.

JP 62074613 A zeigt ein Spritzgusswerkzeug, dessen negativer Formteil aus einer porösen Keramik hergestellt ist. Hinter der Rückwand dieses Formteils befindet sich ein evakuierbarer Zwischenraum. Der Einpressdruck beim Einfüllen des zu formenden Materials ist deutlich erniedrigt, weil die Luft während dieses Vorgangs durch die poröse Wand entweichen kann.

Aufgabe der Erfindung ist es, ein Verfahren und eine Vorrichtung bereitzustellen, mit dem/der sich auch Kondensationsharze oder Harz-/Lösungsmittelkombinationen im Spritzgussverfahren aushärten lassen. Von der Erfindung umfasst sind dabei alle organischen und anorganischorganischen Harze, wobei präkeramische Materialien bevorzugt sind.

Insbesondere ist es Aufgabe der Erfindung, Polymerschmelzen oder Polymerlösungen auf Siliciumbasis, die z.B. mit Kurzfasern gefüllt sein können, im Spritzgussverfahren verarbeiten zu können. Hierfür muss das Verfahren so ausgestaltet sein, dass die Schmelzen bzw. Lösungen bei Temperaturen von vorzugsweise ≤ 500°C zu einem formstabilen Grünkörper aushärten, damit sie bei einer späteren Pyrolyse bei vorzugsweise ≥ 1200°C mit ≥ 60 Masse-% keramischer Ausbeute einen nichtoxidischen Formkörper auf der Basis SiC liefern. Das Si/C-Verhältnis dieser Formkörper ist durch Wahl des Polymers einstellbar; sein N-Gehalt sollte vorzugsweise ≤ 5 Masse-% und/oder sein O-Gehalt sollte vorzugsweise ≤ 1 Masse-% betragen.

Spezielle Polymere, die nicht durch Polykondensations-, sondern durch Polyadditionsreaktionen aushärten, enthalten Funktionalitäten wie C=C-Doppelbindungen und/oder Si-H-Bindungen. Sie sind nicht aus preisgünstigen Ausgangsmaterialien wie der "Disilan-Fraktion" aus dem Müller-Rochow-Prozess (vgl. EP 0 610 809 B1, EP 1 756 201 B1) erhältlich, sondern erfordern kostspieligere Edukte. Will man mit kostengünstigen Ausgangsmaterialien arbeiten, die vor allem über Kondensationsreaktionen aushärten oder nur in Kombination mit Lösungsmittel fließfähig gemacht werden können, ist man demnach gezwungen, ein Verfahren aufzufinden, bei dem die entstehenden kleinmolekularen Spaltprodukte keine Poren, Blasen oder Risse im Werkstück hinterlassen.

Gegenstand der Erfindung ist demnach insbesondere, aber nicht ausschließlich, ein Verfahren zur Herstellung keramischer Formkörper auf der Basis SiC, worin eine Schmelze oder Lösung eines Polymers, beispielsweise auf Si-Basis mit den oben genannten Eigenschaften, durch Spritzgießen verarbeitet wird, wobei der Grünkörper im Spritzgusswerkzeug durch Wärme- und ggf. Unterdruckbehandlung unschmelzbar gemacht und/oder von Lösungs-/Suspensionsmittel befreit und damit formstabilisiert wird. In bevorzugter Weise ist der keramische Formkörper mit Fasern, insbesondere Kurzfasern (z.B. C- oder SiC-Fasern), verstärkt. Er kann schließlich in einem weiteren Schritt durch Pyrolyse bei ≥ 1200°C in ein ggf. faserverstärktes keramisches Bauteil überführt werden.

Die Aufgabe der Erfindung wird dabei gelöst durch die Bereitstellung eines Spritzgusswerkzeugs, das an geeigneten Stellen mit Gasaustrittsöffnungen und/oder porösen Wänden versehen ist, so dass eine eingespritzte, ggf. mit Kurzfasern gefüllte Polymerschmelze oder -lösung durch thermische Polykondensation und/oder durch Entfernen des Lösemittels darin ausgehärtet werden kann, wobei gasförmige Spaltprodukte und Lösemittel, nicht aber die flüssige Polymermasse das Spritzgusswerkzeug verlassen können. Von besonderer Bedeutung ist hierbei, dass die Anordnung der Gasaustrittsöffnungen und/oder porösen Wänden es gestattet, dass Spaltprodukte die eingeschlossene Masse isotrop, d.h. nach allen Richtungen gleichmäßig verlassen können. Hierdurch wird gewährleistet, dass ein möglichst dichter, porenfreier Grünkörper erhalten wird.

Eine Vielzahl von Polymeren auf Si-Basis ist bereits in der Literatur beschrieben, darunter Polycarbosilane (PPCs)(Yajima et al., US 4, 100,233; US 4, 052,430; US 4, 556,526; US 4, 359,559), Polysilazane (Verbeek et al., DE 2 218 960; DE 2 243 527) und Polysilane (z.B. Baney et al., J. Organomet. Chem. 2(1983)859-864 oder Roewer et al., EP 0 610 809 B1). Ein Nachteil dieser Polymere ist ihre in der Regel recht geringe keramische Ausbeute. Geeignet für die vorliegende Erfindung sind prinzipiell alle derartigen Polymere, aber besonders günstig sind insbesondere Polysilan-Polycarbosilan-Copolymere, weil sie einerseits aus kostengünstigen Ausgangsmaterialien wie in der EP 1 756 201 B1 beschrieben erhältlich sind und andererseits eine hohe keramische Ausbeute versprechen. Es handelt sich dabei um Polysilan-Polycarbosilan-Copolymere, die ausgehend von einem Polysilan durch dessen thermisches Nachvernetzen erhalten wurden, wobei das Polysilan vorzugsweise durch Disproportionierung eines oder eines Gemischs mehrerer Methylchlordisilane der Zusammensetzung Si₂MeₙC1₆₋ₙ mit n = 1-4 unter homogener Katalyse mit einer Lewis-Base entstanden ist. Das thermische Nachvernetzen wird nach EP 1 756 201 B1 durchgeführt, bis die Copolymere unschmelzbar geworden sind, um sie dem Trockenspinnverfahren zugänglich zu machen. Diese können durch zusätzliche Verfahrensschritte weiterhin modifiziert sein, z.B. gemäß PCT/EP2009/067703 dechloriert werden, und/oder ihre chemische Zusammensetzung, insbesondere im Hinblick auf Senkung des Gehalts an gebundenem Stickstoff und freiem Kohlenstoff, kann gemäß DE 10 2009 056 371.7 modifiziert werden. Auch eine Modifizierung mit Grignard-Reagenzien, komplexen Hydriden o.ä. ist möglich (vgl. Baney et al., J. Organomet. Chem. 2(1983)859-864). Die keramische Ausbeute dieser Polymere liegt in der Regel deutlich oberhalb 60 Masse-%.

Die Verarbeitung der Polymere erfolgt in Form einer hochviskosen, jedoch fließfähigen, ggf. mit Kurzfasern und möglicherweise zusätzlich oder stattdessen mit Pulvern gefüllten Masse.

Soll beispielsweise das in EP 1 756 201 B1 beschriebene Material verwendet werden, wird das thermische Nachvernetzen nicht bis zur Unschmelzbarkeit, sondern nur so weit geführt, dass das Polymer noch schmelzbar, aber bereits so weit vernetzt ist, dass seine keramische Ausbeute deutlich oberhalb 60 Masse-% beträgt. Alternativ mischt man ein nach EP 1 756 201 B1 hergestelltes, umschmelzbar gemachtes und ggf. nach PCT/EP2009/067703 modifiziertes PPC mit einem inerten Lösemittel (z.B. Toluol, Xylol etc.) in so geringer Menge (max. 20 Masse-%), dass eine bei Raumtemperatur feste oder pastöse Masse entsteht, die erst bei erhöhter Temperatur (50-150°C) erweicht bzw. fließfähig wird. In einer besonderen Ausführungsform der Erfindung wird ein Material eingesetzt, das durch Mischen eines durch thermisches Nachvernetzen bei 400-600°C unschmelzbar und unlöslich gemachten, jedoch chemisch noch reaktivem PPC entweder it einem noch schmelzbarem PPC oder mit der Lösung eines unschmelzbaren, aber noch löslichen PPC in einem inerten Lösungsmittel (z.B. Toluol, Xylol) erhalten wurde. Im letzten Fall ist es günstig, wenn der Lösemittelanteil maximal 20 Masse-%, bevorzugt 5-15 Masse-% und besonders bevorzugt 10 Masse-% beträgt. Der Anteil des hoch vernetzten, unschmelzbaren und unlöslichen PPC beträgt bevorzugt 20-80 Masse-%, mehr bevorzugt 40-60 Masse-% und besonders bevorzugt 50 Masse-%. Überraschend wurde nämlich gefunden, dass ein solcher Zusatz an hoch vernetztem PPC nicht nur die keramische Ausbeute des Gemisches erhöht, sondern auch die Ausgasung der Spaltprodukte aus dem Spritzgusswerkzeug erleichtert. Die Masse bleibt hierbei durch ihren Gehalt an schmelzbarem PPC bzw. an Lösemittel bei einer geeigneten Verarbeitungstemperatur, z.B. 200 °C, noch fließfähig. Die verbleibende chemische Reaktivität der unschmelzbaren, unlöslichen PPC-Partikel bewirkt, dass diese - anders als beim bekannten Keramikpulver-Spritzguss - im Zuge der Pyrolyse mit dem niedriger vernetzten PPC reagieren, so dass ein homogener keramischer Formkörper erhalten wird. Die verbesserte keramische Ausbeute hat den Vorteil, dass das Material während der nachfolgenden Pyrolyse nicht schwindet. Die erleichterte Ausgasung beruht wahrscheinlich darauf, dass das unschmelzbare und unlösliche PPC in Form von festen Körnern vorliegt, um die sich die pastöse Masse schmiegt. Dabei werden Gasblasen zu "Kanälen" verbunden, die das Austreiben der Spaltprodukte/von Lösemitteln erleichtert.

Das Ausgangsmaterial wird ganz allgemein in vorvernetztem, ggf. auch monomerem oder in sonstiger Weise präpolymerisiertem Zustand bereitgestellt, bevorzugt in Form eines wie oben angegebenen zusammengesetzten Gemischs. Die für das Spritzgießen erforderlichen Viskositäten werden durch die Temperatur oder durch die Zugabe von Lösungsmittel eingestellt; sie sind dem Fachmann bekannt. Der Einfachheit halber wird das Material in diesem Viskositätsbereich nachstehend als "pastöse Masse" bezeichnet.

Die Verarbeitung des Polymers kann, je nachdem, ob eine Schmelze oder eine Lösung eingesetzt wird, nach zwei verschiedenen Verfahren erfolgen:

### Erste Variante: Lösemittelfreie Route

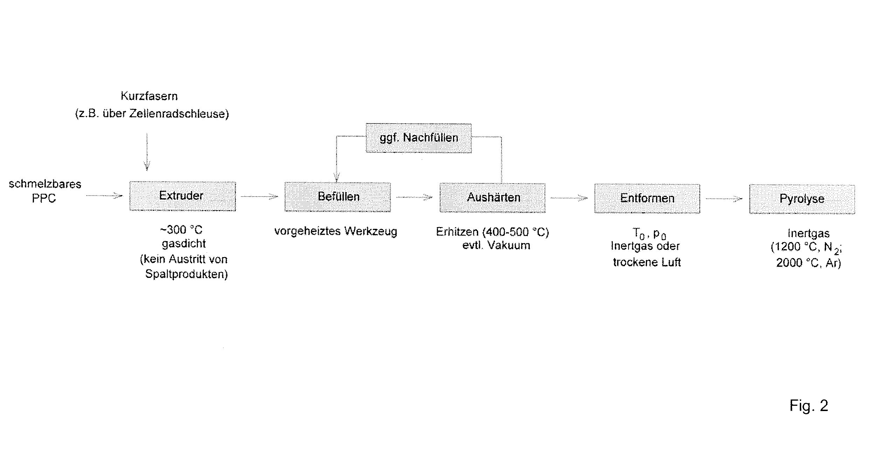

Der Ablauf des Spritzgussverfahrens nach der lösemittelfreien Route ist schematisch in **Figur 2** gezeigt. Dabei sind die Angaben zu den Verfahrensparametern (Druck, Temperatur, Atmosphäre) rein beispielhaft und nicht als beschränkend anzusehen. Ein schmelzbares Polymer, z.B. ein in Anlehnung an EP 1 756 201 B1 nicht ganz bis zur Unschmelzbarkeit vernetztes PPC, wird in einen gasdichten Extruder eingefüllt und darin auf eine Temperatur gebracht, bei der es zu einer fließfähigen Masse erweicht (z.B. 300°C). Da das System gasdicht ist, tritt hier keine Weitervernetzung ein, da Spaltprodukte nicht entweichen können. Ebenfalls in den Extruder können ggf. Kurzfasern (z.B. C- oder SiC-Fasern) eingefüllt werden, beispielsweise über eine Zellenradschleuse; sie werden im Extruder mit der Polymerschmelze vermischt und homogenisiert. Die ggf. mit Kurzfasern gefüllte Polymermasse wird nun in ein auf die Temperatur des Extruders vorgeheiztes Spritzgusswerkzeug gespritzt; das Werkzeug wird weiter unten näher beschrieben. Nach Abkoppeln des Werkzeugs vom Extruder wird dieses auf eine höhere Temperatur (z.B. 400°C) gebracht und ggf. ein Unterdruck angelegt. Unter diesen Bedingungen härtet das Polymer unter Polykondensation und Austritt von Spaltprodukten aus. Die Spaltprodukte verlassen das Spritzgusswerkzeug durch poröse Strukturen in den Wänden des Werkzeugs, z.B. durch Sintermetallwände und/oder Gasaustrittsöffnungen, die so dimensioniert sind, dass die Polymermasse nicht entweicht. Nach Aushärten der Masse und Abkühlen des Werkzeugs kann erneut ggf. kurzfaserhaltige Polymermasse vom Extruder nachgefördert werden, um eventuelle Poren oder Risse im Grünkörper zu schließen. Dieser Vorgang lässt sich, falls erforderlich, mehrmals wiederholen (siehe dazu auch Ausführungsbeispiel unten). Nach abermaligem thermischen Aushärten wird der Grünkörper entformt und der Pyrolyse zugeführt. Diese findet vorzugsweise unter Inertgasatmosphäre statt (N₂, Ar etc.) bis mindestens zu einer Endtemperatur von 1200°C. Hieran können sich weitere Verfahrensschritte, z.B. Nachinfiltration mit Polymer und nochmalige Pyrolyse oder eine Hochtemperaturbehandlung zur gezielten Ausbildung eines kristallinen Gefüges, anschließen.

### Zweite Variante: Lösemittelhaltige Route

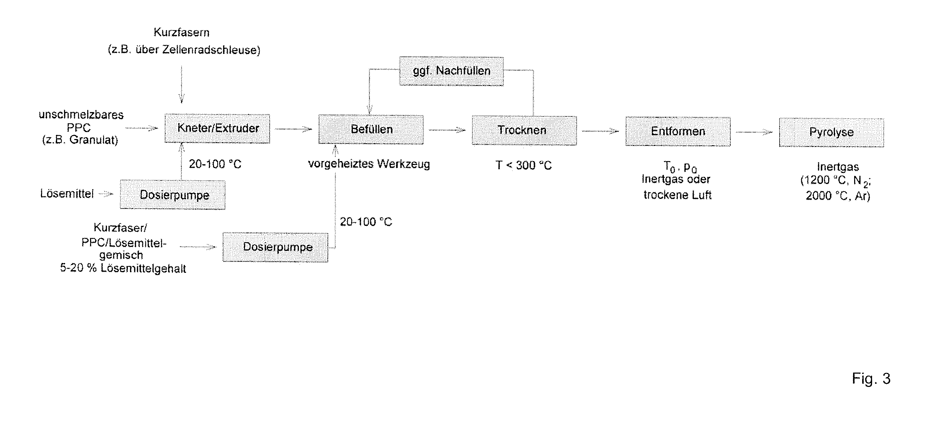

Der Ablauf des Spritzgussverfahrens nach der lösemittelhaltigen Route ist schematisch in **Figur 3** gezeigt. Dabei sind die Angaben zu den Verfahrensparametern (Druck, Temperatur, Atmosphäre) rein beispielhaft und nicht als beschränkend anzusehen.

Hier wird ein festes, lösliches Polymer, z.B. ein nach EP 1 756 201 B1 erhältliches und ggf. chemisch modifiziertes PPC, in Form von Granulat oder Pulver in einen Extruder oder Kneter gegeben. Ebenfalls in den Extruder oder Kneter erfolgt ggf. die Zugabe von Kurzfasern, z.B. über eine Zellenradschleuse, und die Zudosierung eines inerten Lösemittels, z.B. Toluol oder Xylol. Die Lösemittelmenge wird dabei so bemessen, dass das Gemisch fließfähig wird (ggf. unter Erwärmen auf z.B. 100-150°C) und sich im Spritzgussverfahren verarbeiten lässt. Die Masse wird wie oben in ein Spritzgusswerkzeug gespritzt und das Lösemittel durch Erwärmen, z.B. auf 300°C, ausgetrieben. Nach Abkühlen kann weitere Polymerlösung über eine Dosierpumpe in das Werkzeug nachdosiert werden, um den Füllgrad mit Polymer zu vergrößern und damit die Dichte des erhaltenen Werkstücks zu erhöhen. Dieser Vorgang kann bei Bedarf mehrfach wiederholt werden. Ist der gewünschte Füllgrad erreicht, wird der getrocknete Grünkörper entformt, wie oben bis mindestens zu einer Endtemperatur von 1200°C pyrolysiert und ggf. nachbehandelt.

Wie bereits oben erwähnt, sind die üblichen Spritzgusswerkzeuge ungeeignet, um Polymere, die durch Polykondensationsreaktionen bzw. in Gegenwart von Lösungsmittel aushärten, nach dem Spritzgussverfahren zu dichten, d.h. zu (weitestgehend) poren- und blasenfreien Werkstücken verarbeiten zu können. Diese Polymere können daher üblicherweise nicht im Spritzgussverfahren gehärtet werden. Die Erfindung schlägt zur Abhilfe dieses Nachteils ein Spritzgusswerkzeug vor, das Gasaustrittsöffnungen und/oder Wände aus porösen Materialien, z.B. Sintermetallen, aufweist. Die Ausgasung der Spaltprodukte der Polykondensation erfolgt hierbei aufgrund einer geeignet gewählten Anordnung der porösen Wände und/oder Gasaustrittsöffnungen weitestgehend isotrop, wodurch ein poren- und blasenfreier Grünkörper entsteht.

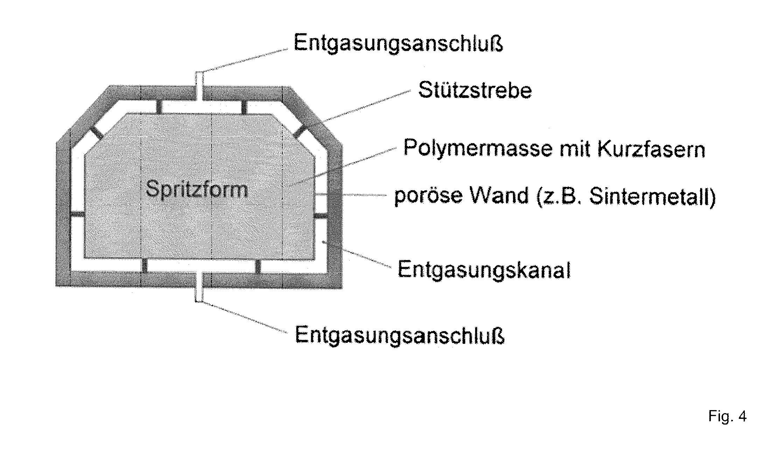

Eine spezifische Ausführungsform des Spritzgusswerkzeugs ist in Figur 4 dargestellt. Die eigentliche Spritzform weist poröse Wände auf. Außen um die Form herum befindet sich ein druckstabiles Stahlgehäuse, mit dem die Spritzform durch Stützstreben so verbunden ist, dass sie dem inneren Druck durch die Befüll- und Entgasungsvorgänge standhält, ohne dass die porösen Wände eine Stärke bekommen müssen, die das Ausgasen der Spaltprodukte oder Lösemitteldämpfe zu stark beeinträchtigt. Der Zwischenraum zwischen Spritzform und Stahlgehäuse kann zur Erleichterung der Entgasung evakuiert oder mit Inertgas, z.B. Stickstoff, gespült werden. Zur Beheizung des Werkzeugs, die unabhängig von derjenigen der übrigen Anlage ist, kommen alle geeigneten Heizmethoden in Betracht, die Stand der Technik sind, wie Öl- oder Gasbeheizung, elektrische oder induktive Beheizung etc. Als Wandmaterial kommen alle bekannten und geeigneten Materialien in Frage, besonders bevorzugt ist Edelstahl. Es können je nach Werkzeuggeometrie offene, dünnwandige Formkörper (Wandstärke unter 10 mm) hergestellt werden, jedoch keine geschlossenen Hohlstrukturen oder hintergriffige Strukturen.

Die Wände des Werkzeugs können in allen Ausführungsformen aus Sintermetallplatten bestehen, vorzugsweise mit einer nominellen Abscheiderate von weniger als 10 µm. Eine andere Werkzeugvariante weist Edelstahlwände mit allseitigen Bohrungen auf, die bevorzugt einen Durchmesser von weniger als 150 µm und einen Abstand von bevorzugt 1-10 mm, mehr bevorzugt 3-5 mm voneinander haben. Um einen Austritt der pastösen Masse durch die Bohrungen besonders wirksam zu verhindern, kann das Werkzeug inwendig mit Siebgewebe einer Maschenweite von beispielsweise 25 µm ausgelegt werden. In einer besonders bevorzugten Ausführungsform wird dieses Siebgewebe mit einem Stützgewebe zur Wand hin abgestützt, dessen Maschenweite z.B. 0,5 mm beträgt.

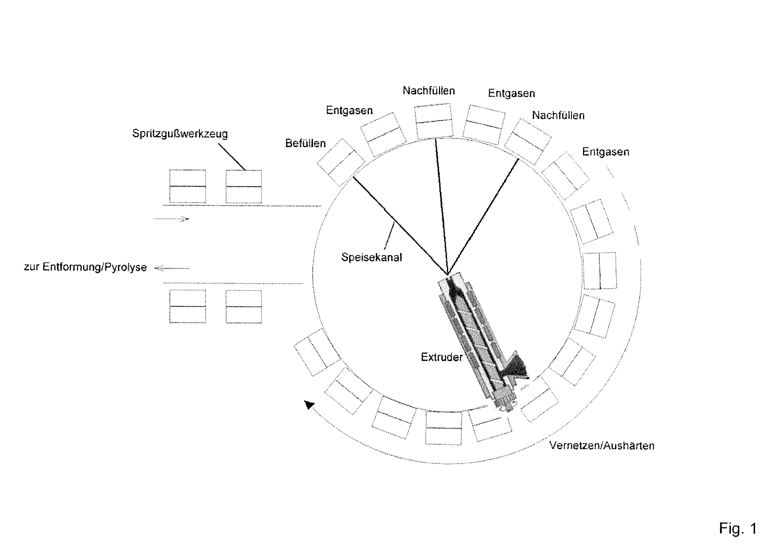

**Figur 1** stellt schematisch ein besonderes Ausführungsbeispiel des Verfahrens dar. Die Spritzgusswerkzeuge werden an eine feststehende Scheibe angedrückt, die mit radialen, temperierbaren Speisekanälen versehen ist. Der Anpressdruck sorgt hierbei für einen dichten Abschluss zwischen Werkzeug und Scheibe. Ein Extruder drückt die Polymer/Kurzfasermasse durch diese Kanäle in die angepressten Werkzeuge. Die Werkzeuge bewegen sich dann schrittweise in einer Kette um die Scheibe herum, wobei in jeder neu erreichten Position Verfahrensschritte wie Entgasen, Nachfüllen oder thermisches Aushärten erfolgen. Es erfolgt dabei ein "Nachstopfen", mit dem sich beispielsweise die Gaskanäle verschließen lassen, die sich bei manchen Ausführungsformen der Erfindung (von denen eine voranstehend beschrieben ist) bilden. Nach dem Aushärten haben die Werkzeuge den Umfang der Scheibe passiert und werden abgekoppelt. In abgekoppeltem Zustand erfolgt das Entformen, worauf die Grünkörper der Pyrolyse und die Werkzeuge einer Reinigung vor ihrer Wiederverwendung zugeführt werden.

In einer besonders bevorzugten Ausführungsform wird ein Werkzeug zunächst mit Hilfe des Extruders mit einer fließfähigen Polymermasse befüllt, die anteilig Kohlenstoff- oder Siliciumcarbid-Kurzfasern und/oder Partikel aus hoch vernetztem, nicht mehr schmelzbarem PPC enthalten kann. Extruder, Speisekanal und Werkzeug besitzen in diesem Verfahrensschritt dieselbe Temperatur, z.B. 200 °C. Das Werkzeug wird dann in die nächste Position gefahren und dadurch vom Speisekanal abgekoppelt. In dieser Position wird es auf eine höhere Temperatur erwärmt, z.B. 300 °C. Hierbei vernetzt die Polymermasse, und Spaltprodukte treten durch die porösen Wände und Entgasungsöffnungen des Werkzeugs aus. Ist dieser Prozess abgeschlossen, wird das Werkzeug in die nächste Position gefahren, in der es mit Polymermasse nachgefüllt wird, um die beim Entgasen entstandenen Hohlräume zu füllen. Dieses Nachfüllen kann nach vorhergehender Abkühlung des Werkzeugs auf die anfängliche Temperatur (z.B. 200 °C) oder - mehr bevorzugt - bei erhöhter Temperatur (z.B. 300 °C) erfolgen, wobei letzteres den Vorteil hat, dass die Polymermasse im wärmeren Werkzeug dünnflüssiger wird und die Hohlräume besser ausfüllen kann. Der Vorgang wird in den folgenden Positionen ggf. wiederholt, so lange, bis ein dichter, möglichst porenfreier Grünkörper entstanden ist, der entformt und der Pyrolyse zugeführt werden kann.

Für das Verfahren unter Verwendung mehrerer Positionen wie in Fig. 1 schematisch dargestellt und in den vorigen Absätzen beschrieben, eignen sich prinzipiell alle präpolymerisierten Materialien, die voranstehend als für die Erfindung prinzipiell geeignet dargestellt wurden, wobei die als bevorzugt genannten Materialien auch für dieses Verfahren bevorzugt sind.

## Patentansprüche

1. Verfahren zum Herstellen von Formkörpern aus durch Kondensationsreaktionen und/oder aus Lösungen/Suspensionen erhaltenen Polymeren, worin ein Ausgangsmaterial in Form einer pastösen Masse in ein Spritzgusswerkzeug gefüllt und darin ausgehärtet wird, **dadurch gekennzeichnet, dass** das Spritzgusswerkzeug Poren oder Öffnungen aufweist, durch die gasförmige Spaltprodukte der Härtungsreaktion und/oder gasförmige Suspensions- bzw. Lösemittel entweichen können, nicht aber das Ausgangsmaterial.

2. Verfahren nach Anspruch 1, worin das Ausgangsmaterial durch erhöhte Temperatur und/oder mit Hilfe eines Lösungs- oder Dispergiermittels in die Form einer pastösen Masse gebracht wird.

3. Verfahren nach Anspruch 1 oder 2, zur Herstellung von Formkörpern aus prekeramischen Polymeren, insbesondere auf der Basis von SiC.

4. Verfahren nach Anspruch 3, **dadurch gekennzeichnet, dass** das Ausgangsmaterial ein lösliches, aber bereits bis zur Umschmelzbarkeit vernetztes oder ein schmelzbares, ggf. unlösliches Polysilan-Polycarbosilan-Copolymer oder eine Mischung eines unschmelzbare und unlöslich gemachten, jedoch chemisch noch reaktiven Polysilan-Polycarbosilan-Copolymer mit einem noch schmelzbaren Polysilan-Polycarbosilan-Copolymer und/oder mit der Lösung eines unschmelzbaren, aber noch löslichen Polysilan-Polycarbosilan-Copolymer in einem inerten Lösungsmittel ist oder aufweist.

5. Verfahren nach einem der voranstehenden Ansprüche, worin das Ausgangsmaterial ohne Lösungsmittelzusatz zumindest bei erhöhter Temperatur in der Form einer pastösen Masse vorliegt.

6. Verfahren nach einem der Ansprüche 1 bis 4, worin das Ausgangsmaterial unschmelzbar ist und mit Hilfe eines unpolaren Lösungs- oder Dispergiermittels in die Form einer pastösen Masse gebracht wurde.

7. Verfahren nach einem der voranstehenden Ansprüche, worin das Ausgangsmaterial weiterhin Fasern, insbesondere Kurzfasern, aufweist.

8. Verfahren nach einem der voranstehenden Ansprüche, **dadurch gekennzeichnet, dass** sich die genannten Poren oder Öffnungen in einer ersten Wandung des Spritzgusswerkzeuges befinden, wobei sie derart angeordnet sind, dass sie ein isotropes Entweichen der Spaltprodukte bzw. des Suspensions- oder Lösemittels ermöglichen.

9. Verfahren nach Anspruch 8, **dadurch gekennzeichnet, dass** das Spritzgusswerkzeug in einem druckstabilen Gehäuse derart angeordnet ist, dass ein Zwischenraum zwischen der ersten Wandung des Spritzgusswerkzeugs und dem Gehäuse vorhanden ist.

10. Verfahren nach Anspruch 9, worin der Zwischenraum evakuiert oder mit Inertgas gespült wird, um die Entgasung zu erleichtern.

11. Verfahren nach einem der voranstehenden Ansprüche, worin einmal oder mehrmals Ausgangsmaterial in das Spritzgusswerkzeug nachgefüllt wird.

12. Verfahren nach Anspruch 10 und Anspruch 11, worin vor jedem Nachfüllen der Zwischenraum evakuiert oder mit Inertgas gespült wird, um die Entgasung zu erleichtern.

13. Spritzgusswerkzeug, bei dem eine erste Wandung, die mit dem spritzzugießenden Material in Kontakt steht, Poren oder Öffnungen aufweist, durch die gasförmige Substanzen nach außen entweichen können, nicht aber eine pastöse Masse, **dadurch gekennzeichnet, dass** die Poren oder Öffnungen so angeordnet sind, dass sie ein isotropes Entweichen der gasförmigen Substanzen ermöglichen.

14. Spritzgusswerkzeug nach Anspruch 13, **dadurch gekennzeichnet, dass** die genannte Wandung aus Sintermetall besteht und/oder Poren aufweist.

15. Spritzgusswerkzeug nach Anspruch 13 oder Anspruch 14, **dadurch gekennzeichnet, dass** die erste Wandung, die mit dem spritzzugießenden Material in Kontakt steht, von einer zweiten, gas- und druckdichten, von der ersten Wandung beabstandeten Wandung eines druckstabilen Gehäuses umgeben ist, worin der Zwischenraum zwischen der ersten und der zweiten Wandung evakuierbar ist.

16. Spritzgussvorrichtung, umfassend mehrere Spritzgusswerkzeuge nach einem der Ansprüche 13 bis 15, die nacheinander an eine Mehrzahl von Stationen transportiert werden können, sowie einen Extruder, der so bewegt werden kann, dass ein einzelnes Spritzgusswerkzeug an mindestens zwei der Stationen mit spritzzugießendem Material beaufschlagt werden kann.

17. Spritzgussvorrichtung nach Anspruch 16, worin die Wandung eines jeden Spritzgusswerkzeugs, die mit dem spritzzugießenden Material in Kontakt steht, von einer zweiten gas- und druckdichten Wandung umgeben ist, und worin sich zwischen jeweils zwei Stationen, an denen das einzelne Spritzgusswerkzeug mit spritzzugießendem Material beaufschlagt werden kann, mindestens eine Station befindet, in der der Zwischenraum zwischen der der ersten und der zweiten Wandung eines jeden Spritzgusswerkzeugs evakuiert werden kann.
